# EUROPÄISCHE PATENTSCHRIFT

(11) **EP 2 983 948 B1**
(45) Veröffentlichungstag und Bekanntmachung des Hinweises auf die Patenterteilung: **26.12.2018**
(21) Anmeldenummer: 14720482.0
(22) Anmeldetag: 07.04.2014
(51) Int. Cl.: B60Q 1/04, B60R 19/24

(54) **HALTEANORDNUNG EINES STOSSFÄNGERS AN EINEM BAUELEMENT EINES PERSONENKRAFTWAGENS SOWIE LEUCHTEINHEIT FÜR EINEN PERSONENKRAFTWAGEN**
HOLDING DEVICE FOR A BUMPER ONTO A COMPONENT OF A PASSENGER CAR AND LIGHT UNIT FOR A PASSENGER CAR
DISPOSITIF DE RETENUE POUR UN PARE-CHOCS SUR UN COMPOSANT D'UNE VOITURE ET UNITÉ DE LUMIÈRE POUR UNE VOITURE

(30) Priorität: 11.04.2013 DE 102013006328
(43) Veröffentlichungstag der Anmeldung: 17.02.2016
(73) Patentinhaber: Daimler AG, 70327 Stuttgart (DE)
(72) Erfinder: BAUR, Eberhard, 72108 Rottenburg (DE); GÜNTHER, Alexander, 73547 Lorch (DE)
(74) Vertreter: JENSEN & SON
(86) Internationale Anmeldenummer: PCT/EP2014/000926
(87) Internationale Veröffentlichungsnummer: WO 2014/166619

(56) Entgegenhaltungen:
- DE-A1-102011 051 686
- US-A1- 2005 190 573

## Beschreibung

Die Erfindung betrifft eine Halteanordnung eines Stoßfängers an einem Bauelement eines Personenkraftwagens gemäß dem Oberbegriff von Patentanspruch 1 sowie eine Leuchteinheit für einen Personenkraftwagen.

Derartige Halteanordnungen sind aus dem Serienfahrzeugbau hinlänglich bekannt. Der Stoßfänger umfasst wenigstens ein Verkleidungselement (Stoßfängerverkleidung) und ein korrespondierendes Trägerelement, welches üblicherweise auch als Grundträger bezeichnet wird und über das Verkleidungselement am Personenkraftwagen gehalten ist.

Im montierten Zustand grenzen an den Stoßfänger anderweitige Anbauteile wie beispielsweise Leuchteinheiten an. Im Laufe der Entwicklung moderner Personenkraftwagen wurde dabei ein jeweiliges Fugenmaß zwischen dem Stoßfänger und den Anbauteilen verringert, um somit ein ansprechendes Design sowie insbesondere eine vorteilhafte Aerodynamik des Personenkraftwagens zu realisieren.

Die DE 10 2011 051 686 A1 offenbart eine Halteanordnung einer Stoßfängerverkleidung an einem Bauelement eines Personenkraftwagens nach dem Oberbegriff von Anspruch 1, bei welcher die Stoßfängerverkleidung an dem Bauelement gehalten ist, wobei das Bauelement als Dichtungselement einer Leuchteinheit ausgebildet ist und wobei das Dichtungselement zumindest mittelbar an einem Gehäuse der Leuchteinheit befestigt ist.

Es ist daher Aufgabe der vorliegenden Erfindung, eine Halteanordnung eines Stoßfängers an einem Bauelement eines Personenkraftwagens sowie eine Leuchteinheit für einen Personenkraftwagen bereitzustellen, mittels welchen sich ein besonders geringes und gleichmäßiges Fugenmaß realisieren lässt.

Diese Aufgabe wird durch eine Halteanordnung mit den Merkmalen des Patentanspruchs 1 sowie durch eine Leuchteinheit für eine solche Halteanordnung mit den Merkmalen des Patentanspruchs 7 gelöst. Vorteilhafte Ausgestaltungen mit zweckmäßigen und nichttrivialen Weiterbildungen der Erfindung sind in den übrigen Ansprüchen angegeben.

Um eine Halteanordnung zu schaffen, mittels welcher sich ein besonders geringes und gleichmäßiges Fugenmaß realisieren lässt, ist es erfindungsgemäß vorgesehen, dass das Bauelement, an welchem der Stoßfänger bzw. sein Verkleidungselement unter Vermittlung des Trägerelements gehalten ist, als ein zumindest mittelbar an einer Leuchteinheit des Kraftwagens gehaltenes Dichtungselement ausgebildet ist. Dies bedeutet, dass der Stoßfänger über das Trägerelement und das Dichtungselement an der beispielsweise in Fahrzeughochrichtung nach oben an den Stoßfänger angrenzenden Leuchteinheit gehalten ist. Hierdurch kann das Fugenmaß, d.h. der Abstand zwischen dem Verkleidungselement des Stoßfängers und der Leuchteinheit, besonders gering gehalten sowie auf ein vorgebbares, gleichmäßiges Maß eingestellt werden. Hieraus resultiert eine besonders gute Aerodynamik und ein optisch ansprechendes Design des Personenkraftwagens. Ferner können die Teileanzahl, das Gewicht und die Kosten gering gehalten werden, da aufgrund der Halterung des Stoßfängers an dem Dichtungselement der Leuchteinheit zusätzliche bauliche Maßnahmen unterbleiben können. Bei dem Dichtungselement handelt es sich vorzugsweise um eine sogenannte Aerodichtung, welche dazu dient, einen Spalt zwischen dem Stoßfänger und der Leuchteinheit zumindest teilweise abzudichten. Infolge dieser Abdichtung kann Luft nicht oder nur sehr geringfügig zwischen dem Stoßfänger und der Leuchteinheit hindurchströmen. Dadurch kann eine besonders vorteilhafte Aerodynamik des Kraftwagens realisiert werden. Weiterhin vorteilhaft ist es, dass das Fugenmaß und somit das Spaltbild während des sogenannten Alterungsprozesses insbesondere des beispielsweise aus einem Kunststoff gebildeten Verkleidungselements und/oder des aus einem Kunststoff gebildeten Trägerelements sowie bei Temperaturschwankungen gleichmäßig gehalten werden kann.

Das Dichtungselement ist zumindest mittelbar an einem Gehäuse der Leuchteinheit gehalten. Vorzugsweise ist es dabei vorgesehen, dass das Dichtungselement unter Umgehung einer am Gehäuse befestigten Scheibe der Leuchteinheit am Gehäuse befestigt ist. Dadurch werden vom Stoßfänger und insbesondere vom Trägerelement in das Dichtungselement eingeleitete Kräfte bzw. Belastungen nicht in die lichtdurchlässige Scheibe, sondern unter Umgehung der Scheibe in das gegenüber der Scheibe stabilere und wesentlich robustere Gehäuse der Leuchteinheit eingeleitet. Dadurch können Beschädigungen der Scheibe beispielsweise infolge von Relativbewegungen des Stoßfängers zur Leuchteinheit vermieden werden. Insbesondere kann vermieden werden, dass der Stoßfänger an der Scheibe der Leuchteinheit scheuert und dadurch die Entstehung von insbesondere sichtbaren Kratzern der Scheibe bewirkt. Darüber hinaus kann eine Druck- und/oder Zugbelastung der Scheibe vermieden werden, da beispielsweise aus Temperaturschwankungen und damit einhergehenden Wärmespannungen sowie aus dem Alterungsprozess resultierende und vom Stoßfänger ausgehende Belastungen über das Dichtungselement in das Gehäuse und nicht in die Scheibe eingeleitet werden.

Mittels der Scheibe ist beispielsweise ein durch das Gehäuse teilweise begrenzter Aufnahmeraum ebenfalls zumindest teilweise begrenzt, wobei in dem Aufnahmeraum wenigstens ein Leuchtmittel zum Emittieren von Lichtstrahlen aufgenommen ist. Die von dem Leuchtmittel der Leuchteinheit emittierten Lichtstrahlen können aus dem Aufnahmeraum durch die Scheiben hindurch an die Umgebung der Leuchteinheit dringen, um so beispielsweise eine in Vorwärtsfahrtrichtung vor dem Personenkraftwagen verlaufende Fahrbahn zu beleuchten. Die Schreibe kann dabei als Streuscheibe zum Streuen der durch sie hindurch tretenden Lichtstrahlen ausgebildet sein, so dass sich eine gleichmäßige Verteilung der Lichtstrahlen und somit eine gleichmäßige Ausleuchtung der Fahrbahn ergibt.

Erfindungsgemäß ist das Dichtungselement unter Vermittlung wenigstens einer am Gehäuse befestigten Halteklammer am Gehäuse befestigt. Hierdurch kann eine besonders feste Halterung des beispielsweise aus einem Kunststoff und insbesondere aus Gummi gebildeten Dichtungselements am Gehäuse realisiert werden, so dass auch eine besonders feste Halterung des Stoßfängers über das Dichtungselement und das Halteelement am Gehäuse realisierbar ist. Vorzugsweise ist das Halteelement eigensteif und beispielsweise aus einem Kunststoff oder aus einem metallischen Werkstoff gebildet, um somit das Dichtungselement besonders fest am Gehäuse zu halten.

Als vorteilhaft hat es sich zudem gezeigt, wenn das Dichtungselement wenigstens eine Aufnahme aufweist, in welcher das Trägerelement zumindest teilweise aufgenommen ist. Hierdurch kann eine einfache Montage des Trägerelements am Dichtungselement realisiert werden, da das Trägerelement auf einfache Weise in der Aufnahme angeordnet, beispielsweise in diese hineingesteckt werden kann.
Eine besonders einfache Montage des Trägerelements am Dichtungselement lässt sich dadurch realisieren, dass das Trägerelement zumindest eine in Fahrzeuglängsrichtung abstehende Rippe aufweist, welche zumindest bereichsweise in der Aufnahme angeordnet ist. Zur Montage des Trägerelements am Dichtungselement kann die Rippe einfach in Fahrzeuglängsrichtung beispielsweise nach hinten in die Aufnahme eingesteckt werden. Dies wird auch als Einschuhung des als Grundträger fungierenden Trägerelements in das Dichtungselement bezeichnet.

Zur Realisierung eines besonders geringen Abstands und somit eines besonders geringen Fugenmaßes zwischen dem Stoßfänger und der Leuchteinheit ist es bei einer weiteren Ausführungsform der Erfindung vorgesehen, dass zumindest ein Teilbereich des Verkleidungselements in Fahrzeughochrichtung nach oben hin zumindest durch einen Teilbereich der Scheibe der Leuchteinheit überdeckt ist.

Eine weitere Ausführungsform zeichnet sich dadurch aus, dass das Dichtungselement in Fahrzeughochrichtung unterhalb der Scheibe der Leuchteinheit angeordnet ist. Hierdurch kann das Dichtungselement einen Spalt zwischen der Leuchteinheit und dem Stoßfänger sehr gut abdichten. Darüber hinaus kann dadurch die Halterung des Stoßfängers am Dichtungselement über eine sehr große, in Fahrzeuglängsrichtung verlaufende Strecke realisiert werden.

Schließlich hat es sich als besonders vorteilhaft gezeigt, wenn das Dichtungselement zumindest gegenüber einem Teilbereich der Scheibe in Fahrzeuglängsrichtung zurückversetzt ist. Handelt es sich bei der Leuchteinheit beispielsweise um einen Frontscheinwerfer, so ist das Dichtungselement gegenüber der Scheibe in Fahrzeuglängsrichtung nach hinten hin zurückversetzt. Dabei kann das Dichtungselement in Fahrzeuglängsrichtung nach außen zumindest teilweise und insbesondere zumindest überwiegend durch das Trägerelement und/oder durch das Verkleidungselement überdeckt und somit kaschiert werden, so dass es nicht sichtbar ist. Darüber hinaus kann dadurch ein sehr geringer Abstand zwischen dem Stoßfänger und der Leuchteinheit, insbesondere dessen Scheibe, dargestellt werden.

Zur Erfindung gehört auch eine Leuchteinheit für eine Halteanordnung, wie sie oben beschrieben wurde, mit einem Gehäuse, mit wenigstens einer am Gehäuse befestigten Scheibe und mit zumindest einem zumindest mittelbar am Gehäuse gehaltenen Dichtungselement. Das Dichtungselement weist dabei eine Aufnahme zur Halterung eines Stoßfängers des Personenkraftwagens auf. Vorteilhafte Ausgestaltungen der erfindungsgemäßen Halteanordnung sind als vorteilhafte Ausgestaltungen der zugehörigen Leuchteinheit anzusehen und umgekehrt. Mit anderen Worten kann diese Leuchteinheit bei der erfindungsgemäßen Halteanordnung verwendet werden, um den Stoßfänger, insbesondere das Verkleidungselement unter Vermittlung des Trägerelements zu halten. Mittels der Leuchteinheit kann somit ein nur sehr geringer Abstand, d.h. ein nur sehr geringes Fugenmaß zwischen dem Stoßfänger und der Leuchteinheit selbst realisiert werden, so dass ein besonders gutes Design sowie eine sehr gute Aerodynamik des Personenkraftwagens realisierbar sind.

Dabei ist das Dichtungselement unter Vermittlung wenigstens einer an dem Gehäuse befestigten Halteklammer am Gehäuse befestigt.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: ausschnittsweise eine schematische und perspektivische Vorderansicht auf eine Halteanordnung eines Stoßfängers an einem Personenkraftwagen, bei welcher der Stoßfänger über wenigstens ein zumindest mittelbar an einem Gehäuse einer Leuchteinheit gehaltenes Dichtungselement der Leuchteinheit an dieser gehalten ist;
- Fig. 2: ausschnittsweise eine schematische und perspektivische Schnittansicht durch die Halteanordnung entlang einer in Fahrzeuglängsrichtung und in Fahrzeughochrichtung verlaufenden Schnittebene;
- Fig. 3: ausschnittsweise eine schematische Vorderansicht auf die Leuchteinheit; und
- Fig. 4: ausschnittsweise eine schematische Rückansicht auf den Stoßfänger.

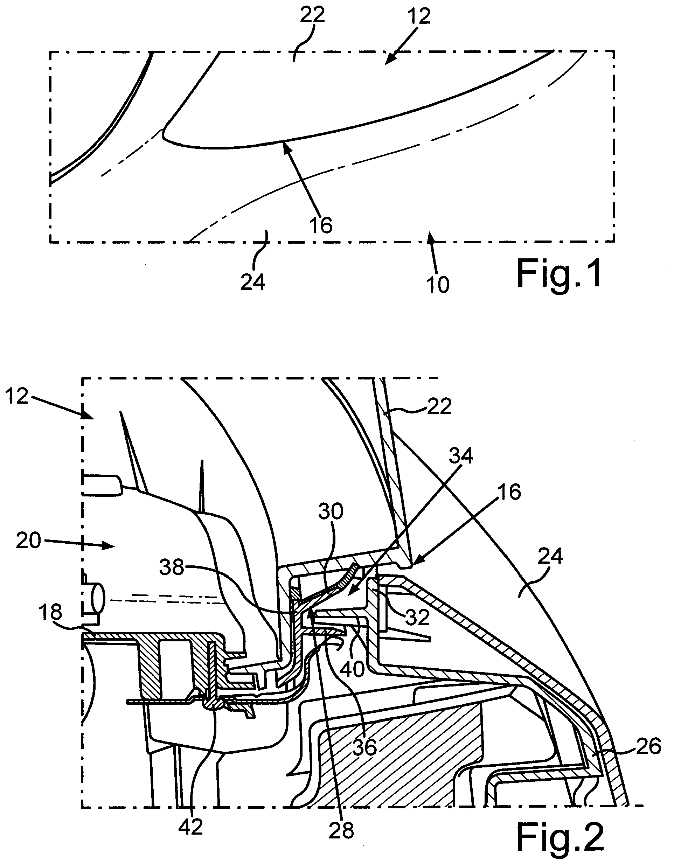

Fig. 1 zeigt in einer schematischen und perspektivischen Vorderansicht einen Personenkraftwagen, an welchem Stoßfänger 10 sowie eine Leuchteinheit in Form eines linken Frontscheinwerfers 12 gehalten sind. Das im Weiteren zum linken Frontscheinwerfer 12 Geschilderte kann auch ohne weiteres auf den rechten Frontscheinwerfer des Personenkraftwagens übertragen werden.

Vom Stoßfänger 10 ist ein Verkleidungselement 24 erkennbar, mittels welchem beispielsweise ein sich in Fahrzeugquerrichtung erstreckender und in Fig. 1 nicht erkennbarer Biegequerträger verkleidet ist. Wie aus Fig. 1 erkennbar ist, grenzt der Frontscheinwerfer 12 zumindest bezogen auf einen Teilbereich des Verkleidungselements 24 in Fahrzeughochrichtung nach oben hin an den Stoßfänger 10 und insbesondere an das Verkleidungselement 24 an. In Fig. 1 ist auch eine Fuge 16 zwischen dem Frontscheinwerfer 12 und dem Verkleidungselement 24 erkennbar. Mit anderen Worten wird die Fuge 16 vom Frontscheinwerfer 12 und vom Verkleidungselement 24 begrenzt.

Wie aus Fig. 2 erkennbar ist, umfasst der Frontscheinwerfer 12 ein Gehäuse 18, durch welches zumindest ein Aufnahmeraum 20 für wenigstens ein Leuchtmittel begrenzt ist. In Fahrzeuglängsrichtung nach vorne ist der Aufnahmeraum 20 durch eine auch aus Fig. 1 erkennbare lichtdurchlässige Scheibe 22 begrenzt. Das Gehäuse 18 und die Scheibe 22 können jeweils aus einem Kunststoff gebildet und miteinander verbunden sein. Beispielsweise ist die Scheibe 22 mittels wenigstens einer Rastverbindung am Gehäuse 18 befestigt.

Wie ferner aus Fig. 2 erkennbar ist, umfasst der Stoßfänger 10 ein Verkleidungselement 24 sowie ein Trägerelement in Form eines Grundträgers 26. Das Verkleidungselement 24 und der Grundträger 26 sind aus einem jeweiligen Kunststoff gebildet, wobei das Verkleidungselement 24 mit dem Grundträger 26 verbunden und über den Grundträger 26 an einem Bauelement des Personenkraftwagens gehalten ist.

Dieses Bauelement ist vorliegend ein dem Frontscheinwerfer 12 zugeordnetes Dichtungselement 28. Wie besonders gut aus Fig. 2 erkennbar ist, ist das Dichtungselement 28 in Fahrzeughochrichtung unterhalb zumindest eines Teilbereichs der Scheibe 22 angeordnet und in Fahrzeughochrichtung nach oben hin zumindest von dem Teilbereich der Scheibe 22 überdeckt. Darüber hinaus ist das Dichtungselement 28 in Fahrzeuglängsrichtung nach hinten hin zumindest gegenüber einem Teilbereich der Scheibe 22 zurückversetzt. Das Dichtungselement 28 ist als sogenannte Aerodichtung ausgebildet, welche eine Dichtlippe 30 aufweist. Die Dichtlippe 30 liegt an einer Wandung 32 der Scheibe 22 an, so dass der Spalt 16 zumindest über einen überwiegenden Teilbereich seiner in Fahrzeugquerrichtung verlaufenden Erstreckung mittels des Dichtungselements 28 zumindest im Wesentlichen abgedichtet ist. Infolge dieser Abdichtung kann Luft bei einer Vorwärtsfahrt des Personenkraftwagens nicht oder nur sehr geringfügig zwischen dem Stoßfänger 10 und dem Frontscheinwerfer 12 durch den Spalt 16 hindurchströmen, so dass eine besonders vorteilhafte Aerodynamik des Personenkraftwagens realisiert werden kann.

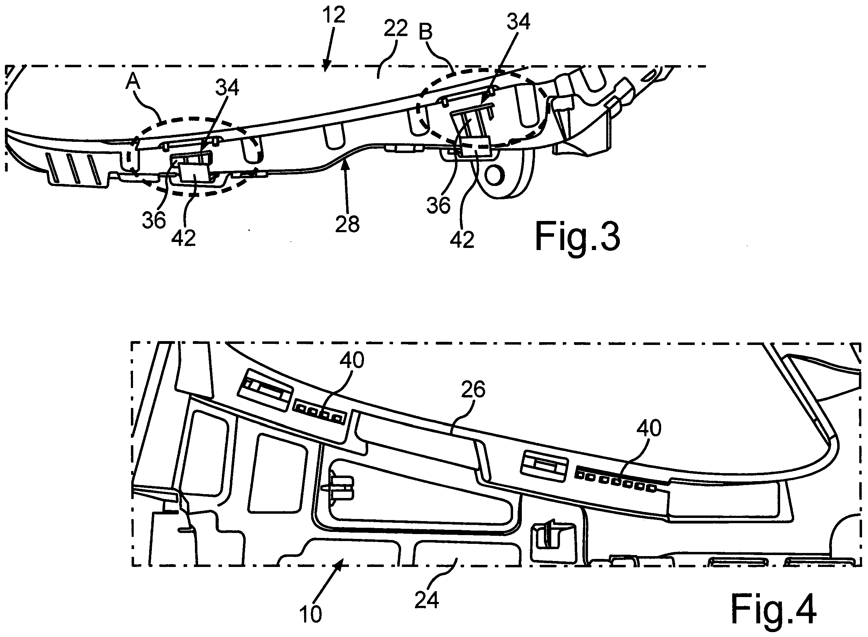

Wie in Zusammenschau mit Fig. 3 erkennbar ist, weist das Dichtungselement 28 zwei in Fahrzeugquerrichtung und somit in Längserstreckungsrichtung des Dichtungselements 28 voneinander beabstandete Aufnahmen 34 auf, welche in jeweiligen Bereichen A und B angeordnet sind. Die jeweiligen Aufnahmen 34 werden - wie aus Fig. 2 erkennbar ist - einerseits, d.h. in Fahrzeughochrichtung nach oben, durch die Dichtlippe 30 und andererseits, d.h. in Fahrzeughochrichtung nach unten, durch eine Rippe 36 des Dichtungselements 28 zumindest teilweise begrenzt. Die Dichtlippe 30 und die Rippe 36 sind über einen Steg 38 miteinander verbunden, wobei der Steg 38 die Aufnahme 34 in Fahrzeuglängsrichtung nach hinten begrenzt. Dabei ist das Dichtungselement 28 einstückig und beispielsweise aus einem Gummi hergestellt, wobei die Dichtlippe 30, die Rippe 36 und der Steg 38 einstückig miteinander ausgebildet sind. In Fahrzeuglängsrichtung nach vorne ist die jeweilige Aufnahme 34 offen, so dass der Grundträger 26 auf besonders einfache Weise in Fahrzeuglängsrichtung nach hinten in die jeweilige Aufnahme 34 eingesteckt werden kann.

Hierzu weist - wie aus einer Zusammenschau mit Fig. 4 erkennbar ist - der Grundträger 26 jeweilige, mit den Aufnahmen 34 korrespondierende Rippen 40 auf, welche bezogen auf die Einbaulage des am Personenkraftwagen gehaltenen Stoßfängers 10 in Fahrzeuglängsrichtung nach hinten abstehen. Die jeweiligen Rippen 40 können nun auf besonders einfache Weise zumindest teilweise in die jeweiligen, korrespondierenden Aufnahmen 34 eingesteckt werden, so dass der Stoßfänger 10 über das Dichtungselement 28 an dem Frontscheinwerfer 12 gehalten ist.

Um eine übermäßige Belastung der Scheibe 22 durch vom Stoßfänger 10 ausgehende Kräfte und/oder Momente zu vermeiden, ist das Dichtungselement 28 nicht direkt an der Scheibe 22 gehalten. Vielmehr ist das Dichtungselement 28 unter Umgehung der Scheibe 22 mittels wenigstens eines Befestigungselements in Form einer aus einem metallischen Werkstoff gebildeten Halteklammer 42 am Gehäuse 18 des Frontscheinwerfers 12 befestigt. Vom Stoßfänger 10 ausgehende Kräfte und/oder Momente, d.h. Belastungen, werden somit nicht in die Scheibe 22, sondern über das Dichtungselement 28 und die Halteklammer 42 in das gegenüber der Scheibe 22 wesentlich robustere Gehäuse 18 eingeleitet. Dadurch kann insbesondere vermieden werden, dass der Stoßfänger 10 an der Scheibe 22 scheuert und diese verkratzt. Insbesondere können Druck- und/oder Zugbelastungen der Scheibe 22 vermieden werden. Gleichzeitig ist es möglich, den Spalt 16 und somit ein Fugenmaß zwischen dem Frontscheinwerfer 12 und dem Stoßfänger 10 besonders schmal auszugestalten, was zu einem vorteilhaften Design sowie zu einer vorteilhaften Aerodynamik des Personenkraftwagens führt. Darüber hinaus kann das Fugenmaß zwischen den beiden Bauteilen in Form des Frontscheinwerfers 12 und des Stoßfängers 10 definiert festgelegt werden. Eine Veränderung des Fugenmaßes während des Lebenszyklus des Personenkraftwagens kann auch bei einem Alterungsprozess der Bauteile sowie bei einer Wärmebelastung gering gehalten werden. Ferner können Maßnahmen zur Kaschierung des Spalts 16 entfallen, was das Gewicht und die Kosten des Personenkraftwagens gering hält.

Vorzugsweise ist - wie aus Fig. 3 erkennbar ist - jeder der Aufnahmen 34 eine aus einem metallischen Werkstoff gebildete Halteklammer 42 zugeordnet. Mit anderen Worten sind zur Befestigung des Dichtungselements 28 am Gehäuse 18 die zwei Halteklammern 42 vorgesehen, wobei diese jeweils im Bereich der entsprechenden Aufnahme 34 angeordnet sind. Dadurch können vom Stoßfänger 10 ausgehende Belastungen besonders gut über die Halteklammern 42 am Gehäuse 18 und nicht etwa über die Scheibe 22 abgestützt werden.

## Patentansprüche

1. Halteanordnung eines wenigstens ein Verkleidungselement (24) und ein korrespondierendes Trägerelement (26) umfassenden Stoßfängers (10) an einem Bauelement (28) eines Personenkraftwagens, bei welcher das Verkleidungselement (24) über das Trägerelement (26) an dem Bauelement (28) gehalten ist,
wobei das Bauelement als Dichtungselement (28) einer Leuchteinheit (12) ausgebildet ist, **dadurch gekennzeichnet, dass** das Dichtungselement (28) zumindest mittelbar an einem Gehäuse (18) der Leuchteinheit (12) befestigt ist, wobei das Dichtungselement (28) unter Vermittlung wenigstens einer am Gehäuse (18) befestigten Halteklammer (42) am Gehäuse (18) befestigt ist.

2. Halteanordnung nach Anspruch 1,
**dadurch gekennzeichnet, dass**
das Dichtungselement (28) wenigstens eine Aufnahme (34) aufweist, in welcher das Trägerelement (26) zumindest teilweise aufgenommen ist.

3. Halteanordnung nach Anspruch 2,
**dadurch gekennzeichnet, dass**
das Trägerelement (26) zumindest eine in Fahrzeuglängsrichtung abstehende Rippe (40) aufweist, welche zumindest bereichsweise in der Aufnahme (34) angeordnet ist.

4. Halteanordnung nach einem der vorhergehenden Ansprüche,
**dadurch gekennzeichnet, dass**
zumindest ein Teilbereich des Verkleidungselements (24) in Fahrzeughochrichtung nach oben hin zumindest durch einen Teilbereich (30) einer Scheibe (22) der Leuchteinheit (12) überdeckt ist.

5. Halteanordnung nach Anspruch 4,
**dadurch gekennzeichnet, dass**
das Dichtungselement (28) in Fahrzeughochrichtung unterhalb der Scheibe (22) der Leuchteinheit (12) angeordnet ist

6. Halteanordnung nach Anspruch 5,
**dadurch gekennzeichnet, dass**
das Dichtungselement (28) zumindest gegenüber einem Teilbereich der Scheibe (22) in Fahrzeuglängsrichtung zurückversetzt ist.

7. Leuchteinheit (12) einer Halteanordnung nach einem der Ansprüche 1 bis 6, mit einem Gehäuse (18), mit wenigstens einer am Gehäuse (18) befestigten Scheibe (22) und mit zumindest einem am Gehäuse (18) gehaltenen Dichtungselement (28), welches wenigstens eine Aufnahme (34) zur Halterung eines Stoßfängers (10) des Personenkraftwagens aufweist, wobei das Dichtungselement (28) unter Vermittlung wenigstens einer am Gehäuse (18) befestigten Halteklammer (42) am Gehäuse (18) befestigt ist.

## Claims

1. Holding assembly for holding a bumper (10) comprising at least one trim element (24) and a corresponding support element (26) on a component (28) of a passenger car, in which the trim element (24) is held on the component (24) via the support element (26), wherein the component is designed as a sealing element (28) of a light unit (12),
**characterised in that**
the sealing element (28) is at least indirectly secured to a housing (18) of the light unit (12), wherein the sealing element (28) is secured to the housing (18) by way of at least one retaining clip (42) secured to the housing (18).

2. Holding assembly according to claim 1,
**characterised in that**
the sealing element (28) has at least one receptacle (34), in which the support element (26) is at least partially accommodated.

3. Holding assembly according to claim 2,
**characterised in that**
the support element (26) has at least one rib (40), which projects in the longitudinal direction of the vehicle and is at least partially located in the receptacle (34).

4. Holding assembly according to any of the preceding claims,
**characterised in that**
at least a sub-region of the trim element (24) is covered in the vertical direction of the vehicle towards the top by at least a sub-region (30) of a glass (22) of the light unit (12).

5. Holding assembly according to claim 4,
**characterised in that**
the sealing element (28) is located below the glass (22) of the light unit (12) in the vertical direction of the vehicle.

6. Holding assembly according to claim 5,
**characterised in that**
the sealing element (28) is set back at least relative to a sub-region of the glass (22) in the longitudinal direction of the vehicle.

7. Light unit (12) of a holding assembly according to any of claims 1 to 6, with a housing (18), with at least one glass (22) secured to the housing (18) and with at least one sealing element (28) held on the housing (18) and having at least one receptacle (34) for holding a bumper (10) of the passenger car, wherein the sealing element (28) is secured to the housing (18) by way of at least one retaining clip (42) secured to the housing (18).

## Revendications

1. Dispositif de retenue d'un pare-chocs (10) comprenant au moins un élément d'habillage (24) et un élément de support correspondant (26) sur un élément structural (28) d'un véhicule particulier, l'élément d'habillage (24) étant retenu au moyen de l'élément de support (26) sur l'élément structural (28), l'élément structural étant conçu sous la forme d'élément d'étanchéité (28) d'une unité lumineuse (12), **caractérisé en ce que** l'élément d'étanchéité (28) est fixé au moins indirectement sur un boîtier (18) de l'unité lumineuse (12), l'élément d'étanchéité (28) étant fixé sur le boîtier par l'intermédiaire d'au moins un clip de retenue (42) fixé sur le boîtier.

2. Dispositif de retenue selon la revendication 1, **caractérisé en ce que** l'élément d'étanchéité (28) présente au moins un logement (34) dans lequel est logé au moins en partie l'élément de support (26).

3. Dispositif de retenue selon la revendication 2, **caractérisé en ce que** l'élément de support (26) présente au moins une ailette (40) faisant saillie dans le sens longitudinal du véhicule, qui est ménagée au moins à certains endroits dans le logement (34).

4. Dispositif de retenue selon l'une quelconque des revendications précédentes, **caractérisé en ce qu'**au moins une zone partielle de l'élément d'habillage (24) dans le sens ascendant du véhicule recouvre vers le haut au moins au moyen d'une zone partielle (30) d'une vitre (22) de l'unité lumineuse (12).

5. Dispositif de retenue selon la revendication 4, **caractérisé en ce que** l'élément d'étanchéité (28) est disposé dans le sens ascendant du véhicule en dessous de la vitre (22) de l'unité lumineuse (12).

6. Dispositif de retenue selon la revendication 5, **caractérisé en ce que** l'élément d'étanchéité (28) est ramené en arrière par rapport à une zone partielle de la vitre (22) dans le sens longitudinal du véhicule.

7. Unité lumineuse (12) d'un dispositif de retenue selon l'une quelconque des revendications 1 à 6, comprenant un boîtier (18), comprenant au moins une vitre (22) fixée sur le boîtier (18) et comprenant au moins un élément d'étanchéité (28) retenu sur le boîtier (18), ledit élément d'étanchéité présentant au moins un logement (34) servant à retenir un pare-chocs (10) du véhicule particulier, l'élément d'étanchéité (28) étant fixé sur le boîtier (18) par l'intermédiaire d'au moins un clip de retenue (42) fixé sur le boîtier (18).
